# EUROPEAN PATENT APPLICATION

(11) **EP 0 649 211 A2**
(43) Date of publication of application: **19.04.1995**
(21) Application number: 94116253.9
(22) Date of filing: 14.10.1994
(51) Int. Cl.: H02K 3/24, H02K 3/22, H02K 15/00, H02K 9/06, H02K 9/04, H02K 9/02, H02K 17/16

(54) **Induction machine and method for manufacturing a rotor of the induction machine**

(30) Priority: 14.10.1993 JP 256847/93
(71) Applicant: MATSUSHITA ELECTRIC INDUSTRIAL CO., LTD., Kadoma-shi, Osaka-fu, 571 (JP)
(72) Inventor: Inoue, Isamu, Neyagawa-shi, Osaka 572 (JP); Igarashi, Yoshiaki, Ikoma-shi, Nara 630-01 (JP); Satou, Shigeru, Katano-shi, Osaka 576 (JP); Narazaki, Kazushige, Katano-shi, Osaka 576 (JP); Matsuura, Sadahiro, Takatsuki-shi, Osaka 569 (JP)
(74) Representative: VOSSIUS & PARTNER

(57) **Abstract**

For controlling an induction machine accurately by an inverter controller or a vector controller, electric resistance of secondary-conductors (14) of a rotor (10) of the induction motor is kept in a predetermined range by cooling the secondary-conductors (14) directly by air flow. For generating the air flow, vanes (21) are provided on both ends of the rotor (10) against the rotation axis (11) of the rotor (10). A ventilation path (15) is formed in and along each secondary-conductor (14) in which the air flows.

## Description

The present invention relates an induction machine such as an induction motor having cooling mechanism of secondary-conductors of a rotor thereof.

In recent years, an induction machine such as an induction motor has been used with variable speed control by an inverter controller according to the state of the art of power electronics. Furthermore, the induction motor has been used in an art where the conventional synchronous servomotor having permanent magnets was used according to the development of vector control technology.

An induction machine such as an induction motor does not use any permanent magnet, so that the configuration of the induction machine is simple and mechanically strong. Furthermore, induction machines are inexpensive. The induction machine or the induction motor, however, has a disadvantage in that it is generally larger than the synchronous motor having the same capacity. For down-sizing an induction machine, it is an important matter how the heat owing to conductor loss in the secondary-conductors of a rotor of the induction machine can be cooled effectively.

On the other hand, for controlling the induction machine successfully by vector control, it is necessary to assume accurately the resistance of the secondary-conductors of the rotor of the induction machine. Thus, the secondary-conductors of the rotor of the induction machine should be cooled in a manner so that the temperature of the secondary-conductors is maintained in a predetermined range. Thus, the variation in resistance of the secondary-conductors owing to the temperature change can be minimized.

Similarly, heat is generated in the primary windings of a stator of the induction machine owing to conductor loss. Since the stator on which the primary windings are wound is fixed and stuck, it is easy to cool the primary windings by a water cooler and the like. On the contrary, the rotor in which the secondary-conductors are provided is rotative, so that cooling the secondary-conductor is more difficult.

An example of a conventional cooling mechanism for cooling the rotor of an induction machine or induction motor is disclosed in Publication Gazette of Japanese Unexamined Patent Application Hei 2-299436. In the conventional cooling mechanism of the rotor of the induction machine, first ventilation paths are provided for penetrating the core of the rotor in a direction parallel to the rotation axis of the rotor. Second ventilation paths are provided for connecting the first ventilation paths to the outer periphery of the core. When the rotor rotates, air flows into the first ventilation paths by pumping operation of the second ventilation paths. The air in the first ventilation paths passes through the second ventilation paths to the outside of the core. Thus, the core of the rotor is cooled.

In the above-mentioned conventional cooling mechanism of the rotor of the induction machine, the secondary-conductors are indirectly cooled via the core. Thus, the secondary-conductors may not be cooled sufficiently. Especially, when the induction machine is driven as an induction motor by an inverter controller or vector controller, reluctance of the rotor is small, so that the amount of heat due to iron loss of the core is a little. Therefore, most of the heat in the rotor is caused by resistance loss of the secondary-conductors. Accordingly, the above-mentioned conventional cooling mechanism is not effective when it is applied to an induction motor.

An objective of the invention is to provide an induction machine having an effective cooling mechanism for cooling the secondary-conductors of a rotor. Another objective of the invention is to provide a method for manufacturing a rotor of the induction machine having the cooling mechanism. Still another objective of the invention is to provide a method for cooling the secondary-conductors of the rotor of the induction machine.

In order to accomplish these and other objects and advantages, an induction machine of the invention comprises:
a plurality of slots formed on an outer surface of a core of a rotor;
a plurality of secondary-conductors formed in the slots;
a plurality of ventilation paths formed in and along the secondary-conductors;
a pair of first and second vanes respectively provided on outer peripheries of both ends of the rotor perpendicular to the rotation axis of the rotor and adjacent to both ends of each of the ventilation paths for generating an air flow in each of the ventilation paths in a predetermined direction when the rotor rotates.

In the induction machine configured above, it is preferable that the first vanes are formed for putting air in the vicinity of the first vanes into the ventilation paths when the rotor rotates in a predetermined direction; and the second vanes are formed for exhausting air in the ventilation path out to the outside of the ventilation path when the rotor rotates in the predetermined direction. By such a configuration, air flow can forced into the ventilation paths which are directly formed in the secondary-conductors. Thus, the secondary-conductors can be cooled effectively.

Furthermore, in the induction machine configured above, it is preferable that the rotor has a drum shape, and the slots are formed on an outer cylindrical surface parallel to a rotation axis of the rotor.

Alternatively, in the induction machine configured above, it is preferable that the rotor has a drum shape and the slots are formed on an outer cylindrical surface slanted against a rotation axis of the rotor in a manner such that air is flown into each of the ventilation path from an opening positioned forward in the rotation direction of the rotor, and the air is exhausted from the other opening of the ventilation path. By such a configuration, the slanted ventilation path can serve as a pump, so that the flowing speed of the air flowing into the ventilation path can be made faster.

Alternatively, in the induction machine configured above, it is preferable that the rotor has a disc shape, and the slots are provided on a plane surface perpendicular to the rotation axis of the rotor in radial direction against the rotation axis.

Furthermore, in the induction machine configured above, it is preferable that each of the ventilation path is one alternatively selected from a channels and a tube formed in the secondary-conductor.

In addition, in the induction machine configured above, it is preferable that a mortise of a groove along the slot or a hollow is formed on each side face of the slot where a width of the bottom of the mortise is wider than a width of the opening of the mortise; each of the secondary-conductor is formed by casting in each of the slot; and a part of the secondary-conductor filled into the mortise serves as a tenon.

Alternatively, in the induction machine configured above, it is preferable that a tenon having a rail shape along the slot or protrusion is formed on each side face of the slot, where a width of a top end of the tenon is wider than a width of a neck of the tenon; each of the secondary-conductors is formed by casting in each of the slot; and a part of the secondary-conductor engaged with the tenon serves as a mortise.

Alternatively, in the induction machine configured above, it is preferable that an overhang of a rail shape along the slot or protrusion is formed on each side face of the slot, where a width of a top end of the overhang is wider than a width of a neck of the overhang; each of the secondary-conductors is formed by casting in each of the slot; and a part of the secondary-conductor engaged with the overhang serves as a mortise. By such a configuration, the secondary-conductor does not fall out from the slot even when the rotor rotates.

Furthermore, in the induction machine configured above, it is preferable that the narrowest part of the slot is positioned in the vicinity of the open end of the slot. By such a configuration, magnetic flux from a stator can easily permeate into the secondary-conductor.

Alternatively, in the induction machine configured above, it is preferable that a square pipe serving as the secondary-conductor and the ventilation path is inserted into each of the slots. By such a configuration, the manufacturing process of the secondary-conductor and the ventilation path can be simplified.

Furthermore, in the induction machine configured above, it is preferable that surfaces of the ventilation path are made uneven by forming protrusions or roughing in order to create turbulent air flow therein. By such a configuration, turbulent flow which has a larger cooling capacity than laminar flow can easily be generated.

Another induction machine of the invention comprises:
a plurality of herringbone-shaped slanted slots formed on an outer cylindrical surface of a core of a rotor;
a plurality of secondary-conductors formed in the slanted slots;
a plurality of herringbone-shaped slanted ventilation paths formed in and along the secondary-conductors in a manner that both openings of each slanted ventilation path are positioned forward against the rotation axis of the rotor when the rotor rotates in a predetermined direction;
a plurality of air paths formed at positions on a stator facing turning points of the slanted ventilation paths and connecting a gap between the rotor and the stator and the outside of the induction motor;
a pair of vanes respectively provided on outer peripheries of both ends of the rotor perpendicular to the rotation axis of the rotor and adjacent to both ends of each of the slanted ventilation paths for putting air in the vicinity of the vanes into the slanted ventilation paths and passing the air through the air path to the outside when the rotor rotates in the predetermined direction, and for absorbing air from outside of the induction motor into the slanted ventilation path through the air paths when the rotor rotates in a direction opposite to the predetermined direction.

By such a configuration, the air flowing into the slanted ventilation path cools only half of the secondary-conductor. Thus, the temperature gradient along the secondary-conductor can be made gentle.

In the induction motor configured above, it is preferable that a buffer space, which is connected to the air paths, is formed in the stator for preventing the occurrence of pulsating air flow.

Furthermore, in the induction machine configured above, it is preferable that a mortise shaped as a groove along the slot or a hollow is formed on each side face of the slot where a width on the bottom of the mortise is wider than a width of the opening of the mortise; each of the secondary-conductors is formed by casting in each of the slot; and a part of the secondary-conductor filled into the mortise serves as a tenon.

Alternatively, in the induction machine configured above, it is preferable that a tenon having a rail shape along the slot or protrusion is formed on each side face of the slot, where a width of a top end of the tenon is wider than a width of a neck of the tenon; each of the secondary-conductors is formed by casting in each of the slot; and a part of the secondary-conductor engaged with the tenon serves as a mortise.

Alternatively, in the induction machine configured above, it is preferable that an overhang having a rail shape along the slot or protrusion is formed on each side face of the slot, where a width of a top end of the overhang is wider than a width of a neck of the overhang; each of the secondary-conductors is formed by casting in each of the slot; and a part of the secondary-conductor engaged with the overhang serves as a mortise.

Furthermore, in the induction machine configured above, it is preferable that the narrowest part of the slot is positioned in the vicinity of the open end of the slot.

In the induction machine configured above, it is preferable that surfaces of the slanted ventilation paths are made uneven by forming protrusions or roughing in order to create turbulent air flow therein.

Still another induction machine of the invention comprises:
an impeller rotatively borne by a bearing which is disposed co-axially with a rotation axis of a rotor of the induction machine; and
means for driving the impeller independently from the rotation of the rotor for generating air flow for cooling the rotor.

By such a configuration, the shape of the rotor can be simplified without the vanes, so that the induction machine can be down-sized.

In the induction machine configured above, it is preferable that the rotation direction of the impeller is alternatively changed in opposite directions at a predetermined interval for changing direction of air flow flowing in a gap between the rotor and a stator of the induction motor.

By such a configuration, both sides of the secondary-conductor along the rotation axis of the rotor can be cooled evenly.

In the induction motor configured above, it is preferable further to comprise:
a plurality of slots formed on an outer surface of a core of the rotor;
a plurality of secondary-conductors formed in the slots; and
a plurality of ventilation paths formed in and along the secondary-conductors.

Still another induction machine of the invention comprises:
a plurality of slots formed on an outer surface of a core of a rotor;
a plurality of secondary-conductors formed in the slots;
a plurality of ventilation paths formed in and along the secondary-conductors;
at least one air path for supplying or exhausting air to or from substantially the center of the ventilation paths; and
pressure difference generating means disposed outside of the induction machine for generating the pressure difference between the ventilation paths and the air path, thereby for generating air flow in the ventilation paths for cooling the rotor.

By such a configuration, the induction machine does not comprise the pressure difference generating means inside thereof. Thus, the induction machine can be made much simpler and smaller.

In the induction machine configured above, it is preferable that the air paths penetrate a stator of the induction machine.

Furthermore, in the induction motor configured above, it is preferable that the air paths comprise an axial part provided in a shaft of the rotor co-axially with the rotation axis thereof and at least one radial part provided in the shaft perpendicular to the rotation axis.

A method for manufacturing a rotor of an induction machine of the invention comprises the steps of:
putting a core of a rotor having a plurality of slots formed on outer surface of the core into a casting mold;
inserting an insert die into each slot through the casting mold;
filling molten metal into a space formed by the slot, the insert die and the casting mold;
pulling the insert die out of the slot after solidification of the metal; and
taking off the core from the casting die.

By such a manufacturing method, the secondary-conductors and the ventilation paths can be made at the same time. Thus, such a manufacturing method can be suitable for mass production of the rotor of the induction motor.

### BRIEF DESCRIPTION OF THE DRAWINGS

FIG.1 is a perspective view showing a configuration of a rotor of an induction motor according to a first embodiment of an induction motor of the invention.

FIG.2 is a partially enlarged sectional view showing an example of a section of the rotor in a direction vertical to a rotation axis of the rotor shown in FIG.1.

FIG.3 is a partially enlarged sectional view showing another example of a section of the rotor in a direction vertical to a rotation axis of the rotor shown in FIG.1.

FIG.4 is a partially enlarged sectional view showing still another example of a section of the rotor in a direction vertical to a rotation axis of the rotor shown in FIG.1.

FIG.5 is a sectional view showing an example of a method for forming a ventilation path of the rotor, for example, shown in FIG.2.

FIG.6 is a partially enlarged perspective view showing an example of vanes of the rotor, for example, shown in FIG.1.

FIG.7 is a partially enlarged perspective view showing another example of vanes of the rotor, for example, shown in FIG.1.

FIG.8 is a partially enlarged side view of the rotor shown in FIG.7.

FIG.9 is a partially enlarged perspective view showing another example of the shape of the ventilation path in the first embodiment.

FIG.10 is a perspective view showing a configuration of a rotor of an induction motor according to a second embodiment of an induction machine of the invention.

FIG.11 is a perspective view showing a configuration of a rotor of an induction motor according to a third embodiment of an induction motor of the invention.

FIG.12 is a sectional side view showing a configuration of the induction motor having the rotor shown in FIG.11.

FIG.13 is a perspective view showing a configuration of a stator of the induction motor shown in FIG.12.

FIG.14 is a sectional side view showing a configuration of an induction motor according to a fourth embodiment of an induction machine of the invention.

FIG.15 is a partially enlarged sectional side view showing another configuration of the induction motor according to the fourth embodiment of the invention.

FIG.16 is a sectional side view showing a configuration of an induction motor according to a fifth embodiment of an induction machine of the invention.

FIG.17 is a sectional side view showing another configuration of the induction motor according to the fifth embodiment of the invention.

FIG.18 is a perspective view showing a configuration of a disc-shaped rotor which is alternatively changeable to the drum-shaped rotor shown in FIGS. 1 to 17.

FIG.19 is a sectional side view showing a configuration of the disc-shaped rotor shown in FIG.18.

### DETAILED DESCRIPTION OF THE INVENTION

### FIRST EMBODIMENT

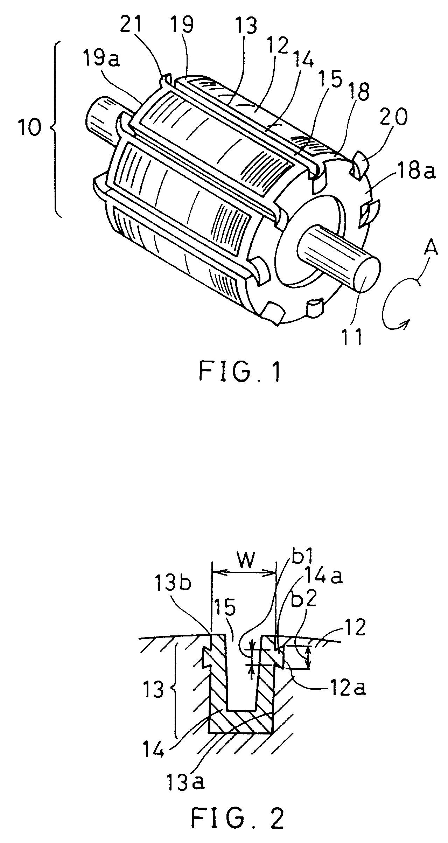

A first preferred embodiment of an induction machine of the invention is described referring to FIGS. 1 to 8.

As shown in FIG.1, the rotor 10 of the induction motor according to the first embodiment of the invention comprises a shaft 11 and a core 12 fixed on the shaft 11. The core 12 is formed into a drum shape by piling up of plates made of silicon steel plate, and the like. A plurality of slots 13 are formed on a cylindrical outer face of the core 12. As shown in FIG.2, a secondary-conductor 14 is provided in each slot 13. The secondary-conductor 14 is made by casting of aluminum in a manner so that the section of the secondary-conductor 14 has a channel shape. The channel of the secondary-conductor 14 serves as a ventilation path 15. Namely, the ventilation path 15 is formed in and along the secondary-conductor 14 in a direction parallel to the rotation axis (or the shaft 11) of the rotor 10. A pair of first and second vanes 20 and 21 are respectively provided adjacent to both ends of each of the ventilation paths 15.

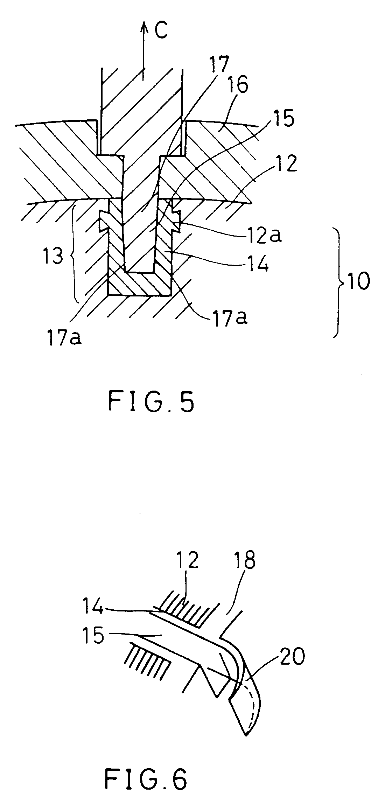

As shown in FIGS. 1 and 6, short-circuiting circular rings 18 and 19 are provided on both ends of the core 12 in a direction vertical to the rotation axis (or the shaft 11) of the rotor 10. The circular rings 18 and 19 are formed by casting of the aluminum at the same time as casting the secondary-conductors 14. Thus, all the secondary-conductors 14 are electrically short-circuited by the circular rings 18 and 19. The first vanes 20 are integrally formed on an outer periphery of a surface 18a of the circular ring 18. Similarly, the second vanes 21 are integrally formed on an outer periphery of a surface 19a of the circular ring 19. Both of the first and second vanes 20 and 21 are respectively curved in a plane vertical to the surfaces 18a and 19a of the circular rings 18 and 19, but the direction of the curves of the vanes 20 and 21 are opposite to each other against the ventilation path 15. The first and second vanes 20 and 21 are formed by the casting of the aluminum at the same time as casting the secondary-conductor 14. Alternatively, the first and second vanes 20 and 21 are formed by cutting works after the casting of the secondary-conductors 14.

When the rotor 10 is rotated in the direction shown by arrow A in FIG.1, air in the vicinity of the first vane 20 collides with the first vane 20 and is forced into the ventilation path 15. Similarly, air in the vicinity of the second vane 21 collides with the second vane 21 and pushed away from the rotor 10. Thus, a pressure difference is generated between the outside and inside of the ventilation path 15. The air in the ventilation path 15 is exhausted to the outside by the pressure difference due to the movement of air from the second vane 21. As a result, air is forced into the ventilation path 15 provided in the secondary-conductor 14 at a high speed, so that the secondary-conductor 14 can be cooled effectively.

As shown in FIG.2, a mortise 12a is formed on each side face 13a of the slot 13. A width b1 on the bottom of the mortise 12a is wider than a width b2 of opening of the mortise 12a. A part 14a of the secondary-conductor 14 filled in the mortise 12a serves as a tenon, so that the part 14a of the secondary-conductor 14 is firmly in contact with the mortise 12a. As a result, the secondary-conductor 14 can not fall out from the slot 13 of the core 12 even when the rotor 10 rotates.

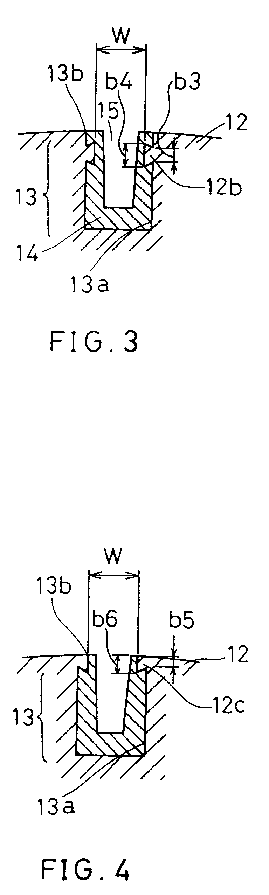

The configuration of the secondary-conductor 14 and the slot 13 of the core 12 is not limited to the configuration shown in FIG.2. Alternatively, as shown in FIG.3, a tenon 12b having a rail shape can be formed on each side face 13a of the slot 13, where a width b4 of a top end of the tenon 12b is wider than a width b3 of a neck of the tenon 12b. Alternatively, as shown in FIG.4, an overhang 12c having a rail shape can be formed at an upper end of each side face 13a of the slot 13, where a width b6 of a top end of the overhang 12c is wider than a width b5 of a neck of the overhang 12c.

Generally, the narrowest part having a width W of the slot 13 is preferable positioned in the vicinity of the open end 13b of the slot 13, since magnetic flux from a stator (not shown in the figure) which face to the cylindrical outer face of the rotor 10 can easily permeate into the secondary-conductor 14. When the amount of magnetic flux permeating into the rotor 10 from the stator becomes larger, torque generated by the rotor 10 can be made larger.

A set of the first and second vanes 20 and 21 and the ventilation path 15 are not necessarily provided on each secondary-conductor 14 in the slot 13. When the amount of heat radiation by air flows generated by the vanes 20 and 21 and flowing into the ventilation paths 15 is sufficient to cool the heat generated in the rotor 10, the vanes 20 and 21 and the ventilation path 15 can be provided at intervals of n (n = 1, 2, 3, ...) lines of the slots 13.

In the above-mentioned first embodiment, the mortise 12a shown in FIG.2 is formed as a groove, but it is possible to form the mortise 12a as a hollow. Similarly, the tenons 12b shown in FIG.3 and the overhang 12c shown in FIG.4 are respectively formed as a rail shape, but they can be made as protrusions.

Next, a method for forming the secondary-conductor 14 and the ventilation path 15 is described referring to FIG.5. As shown in FIG.5, an insert die 17 is inserted into the slot 13 through a casting mold 16. Drafts 17a are formed on both sides of the insert die 17, as needed. Under this condition, melted aluminum is filled into the space formed by the casting mold 16, the insert die 17 and the core 12. After solidification of the aluminum, the insert die 17 is extracted in a direction shown by arrow C in the figure and the core 12 is taken out from the casting mold 16. Thereby, the remaining cast aluminum corresponds to the secondary-conductor 14 and the space where the insert core 17 was positioned corresponds to the ventilation path 15. Namely, the secondary-conductor 14 and the ventilation path 15 can be formed effectively at the same time. Alternatively, if volume of production is small, the ventilation paths 15 are formed by cutting work after casting the aluminum.

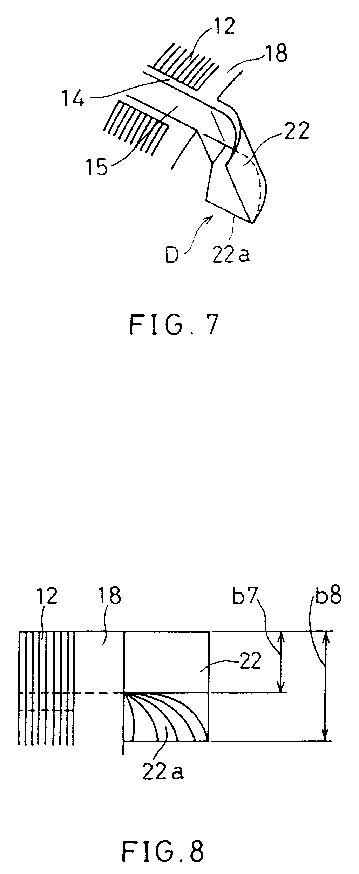

The shape of the first blade 20 is not limited by the shape shown in FIG.6. For example, as shown in FIGS. 7 and 8, it is preferable to provide a side plate 22a at inside of each vane 22 in which a width b8 of a top end of the vane 22 is wider than a width b7 of a neck part thereof. Thus, an amount of the air flow, which flows into the ventilation path 15, generated by the vane 22 shown in FIGS. 7 and 8 is much larger than the amount of the air flow generated by the vane 20 shown in FIG.6.

In the above-mentioned first embodiment, the ventilation path 15 is formed as a channel along the secondary-conductor 14. However, the ventilation path can be formed as a tube penetrating the secondary-conductor 14 in a lengthwise direction thereof. The tube shaped ventilation path serves as a cooling means for cooling the secondary-conductor 14 substantially the same as the channel-shaped ventilation path 15.

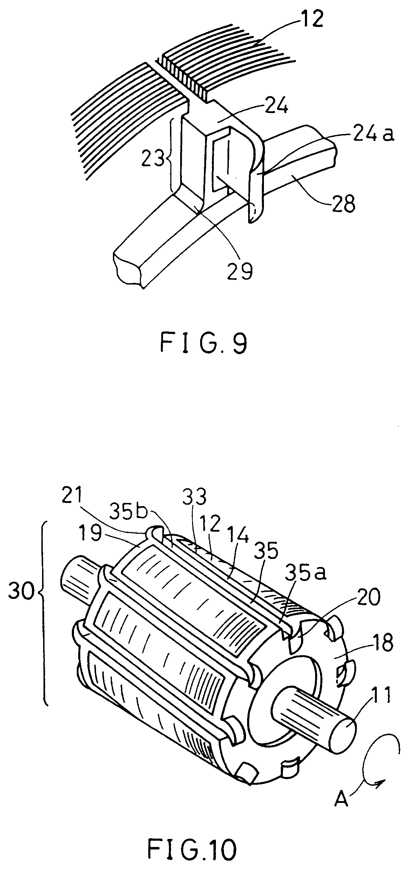

Another example of the shape of the ventilation path is described referring to FIG.9. As shown in FIG.9, a square pipe 24 made of, for example, copper is put into a slot 23 which is formed on the core 12. A vane 24a is formed by processing an end part of the square pipe 24. Each square pipe 24 is connected to a short-circuiting circular ring 28 by welding or brazing. In FIG.9, numeral 29 designates a cladding part formed by the welding or brazing. In this configuration, the square pipe 24 serves as a secondary-conductor and a ventilation path. When the rotor is rotated, the air in the vicinity of the vane 24a forcibly enters into the square pipe 24 and the square pipe 24 serving as the secondary-conductor can be cooled.

### SECOND EMBODIMENT

A second preferred embodiment of an induction machine of the invention is described referring to FIG.10. FIG.10 is a perspective view showing a configuration of a rotor 30 of an induction motor according to the second embodiment. The elements designated by the same numerals in the first embodiment are substantially the same as those in the first embodiment. Thus, explanation of them are omitted.

As shown in FIG.10, a plurality of slots 33, which are formed on the cylindrical outer face of the core 12, are slanted against the rotation axis (or the shaft 11) of the rotor 30. Similarly, a ventilation path 35 formed on the secondary-conductor 14 in each slot 33, which corresponds to the ventilation path 15 in the first embodiment, is slanted against the rotation axis. In the above-mentioned first embodiment, the arrangement of the ventilation paths 15 is parallel to the rotation axis (or the shaft 11) of the rotor 10 in the first embodiment. However, the arrangement of the ventilation paths 35 in the second embodiment is slanted against the rotation axis (or the shaft 11) of the rotor 30.

In view of the rotation direction of the rotor 30 shown by arrow A in FIG.10, an opening 35a of the ventilation path 35 from which the air flows into the ventilation path 35 is positioned forward against the rotation axis (or the shaft 11) of the rotor 30 compared to the other opening 35b of the ventilation path 35 from which the air flows out from the ventilation path 35.

The first vanes 20 are provided on the circular ring 18 and adjacent to respective openings 35a in a manner so that the air colliding with the vanes 20 is forced into the ventilation paths 35 by the rotation of the rotor 30 in the direction shown by arrow A. Similarly, the second vanes 21 are provided on the circular ring 19 and adjacent to respective openings 35b in a manner so that the air colliding with the vanes 21 is forced into the ventilation paths 35 by the rotation of the rotor 30 in a direction opposite to the direction shown by arrow A. By such a configuration, each of the slanted ventilation path 35 serves as a pump, since the air in the slanted ventilation path 35 is conveyed along the slanted side walls of the ventilation path 35 and pushed out from the opening 35a or 35b. Thus, the flowing speed of the air in the ventilation path 35 in the second embodiment is faster than the speed in the above-mentioned first embodiment. As a result, the cooling capacity of the cooling mechanism in the second embodiment is larger, and therefore it can be applied to an induction motor that produces more heat.

### THIRD EMBODIMENT

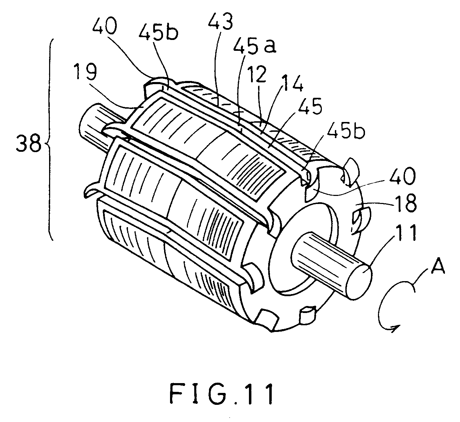

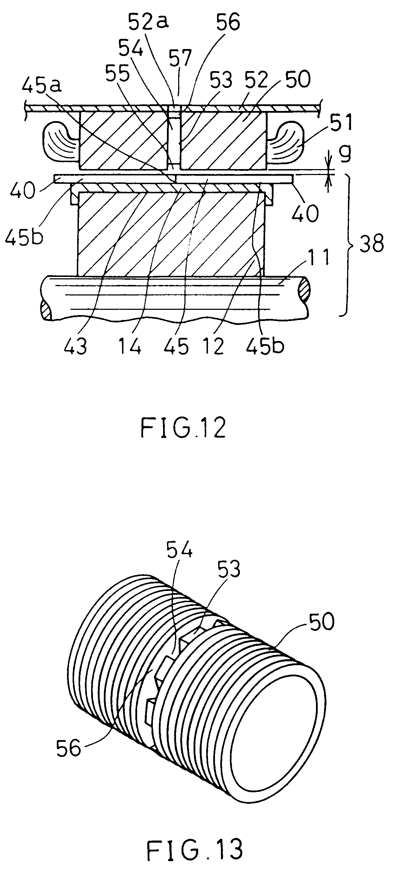

A third preferred embodiment of an induction machine of the invention is described referring to FIGS. 11, 12 and 13. FIG.11 is a perspective view showing a configuration of a rotor of an induction motor according to the third embodiment. FIG.12 is a sectional side view showing a configuration of the induction motor. FIG.13 is a perspective view showing a configuration of a stator core of the induction motor. The elements designated by the same numerals in the above-mentioned first embodiment are substantially the same as those in the first embodiment. Thus, the explanation of them are omitted.

As shown in FIG.11, slots 43 corresponding to the slots 13 in the first embodiment are slanted as herringbone-type. Similarly, a ventilation path 45 formed on each secondary-conductor 14 in the slot 43 is slanted as herringbone-shape. Vanes 40 which are substantially the same as the vanes 20 in the first embodiment are provided on the circular rings 18 and 19 and adjacent to both openings 45b of each ventilation path 45 in a manner so that the air colliding with the vanes 40 is forced into the ventilation paths 45 by the rotation of the rotor 38 in the direction shown by arrow A. When the rotor 38 rotates in the direction shown by arrow A, both openings 45b of the ventilation path 45 are positioned forward against a turning point 45a of the herringbone-shaped slanted ventilation path 45. By such a configuration, the herringbone-shaped slanted ventilation path 45 serves as a pump similar to the above-mentioned second embodiment, so that the amount air flowing to the turning point 45a becomes larger.

As shown in FIGS. 12 and 13, a stator of the induction motor comprises a pair of stator cores 50 which move away from each other in the axial direction of the rotor 38 with a predetermined gap by spacers 53, primary windings 51 wound around the stator cores 50 and a frame 52 for holding the stator cores 50. Radial air paths 54 are formed by the stator cores 50 and the spacers 53 in the radial direction against the rotation axis of the rotor 38. As shown in FIG.12, inner surfaces of the stator cores 50 and an outer surface of the rotor 38 face each other with a predetermined gap "g".

A circular inner space 55, which is formed by the stator cores 50, the spacers 53 and the rotor 38, serves as a buffer space for restricting the occurrence of the pulsating flow of the air flowing from the turning point 45a to the radial air path 54. A circular outer space 56, which is formed by the stator cores 50, the spacers 53 and the frame 52, is connected to the outside 57 of the frame 52 by connection holes 52a provided on the frame 52.

When the rotor 38 rotates in the direction shown by arrow A, the air is forcibly flown into the herringbone-shaped slanted ventilation path 45 by the vanes 40 and the pumping operation of the ventilation path 45. The air reached to the turning point 45a is exhausted to the outside 57 through the circular inner space 55, the radial air paths 54, the circular outer space 56 and the connection holes 52a.

On the other hand, when the rotor 38 rotates in a direction opposite to the direction shown by arrow A, the vanes 40 and the herringbone-shaped slanted ventilation paths 45 serve as a pump in the opposite way to the operation in the above mentioned case. Thus, the air in the outside 57 of the frame 52 is absorbed into the ventilation paths 45 through the connection holes 52a, the circular outer space 56, the radial air paths 54 and the circular inner space 55. The air passes in the ventilation path 45 from the turning point 45a to both of the openings 45b with cooling the secondary-conductor 14. The air which has cooled the secondary-conductor 14 is exhausted from the openings 45b.

In this herringbone-shaped slanted ventilation path 45, the air flowing from both openings 45b cools only half the secondary-conductor 14. Thus, it is possible to make a gentle temperature gradient along the secondary-conductor 14.

In the above-mentioned first, second and third embodiments, the secondary-conductor is directly cooled by the air flowing into the channel or tube of the ventilation path provided on the secondary-conductor. However, the cooling capacity of turbulent air flow is larger than that of laminar air flow. Thus, for increasing the cooling capacity of the air flowing into the ventilation path on the secondary-conductor, it is preferable to make the surfaces of the ventilation path uneven by forming protrusions or roughing in order to make turbulent air flow. By forming protrusions or roughing the surface, the area of the radiating surface is made larger. Therefore, the cooling capacity of the cooling mechanism is larger.

### FOURTH EMBODIMENT

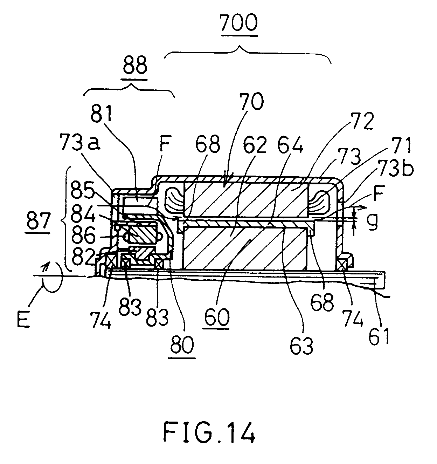

A fourth preferred embodiment of an induction machine of the invention is described referring to FIG.14. FIG.14 is a sectional side view showing a configuration of an induction motor according to the fourth embodiment.

As shown in FIG.14, the induction motor 700 comprises a rotor 60, a stator 70 and a frame 73. The rotor 60 comprises a shaft 61, a core 62 having a drum shape and fixed on the shaft 61, a plurality of slots 63 provided on a cylindrical outer surface of the core 62, secondary-conductors 64 formed in the slots 63 and circular rings 68 provided on both ends of the core 62 for short-circuiting the secondary-conductors 64. The stator 70 comprises a stator core 72 and primary windings 71 wound around the stator core 72. The stator 70 is fixed on an inner surface of the frame 73. The shaft 61 of the rotor 60 is rotatively borne by bearings 74 which are held on the frame 73.

An impeller wheel 80 is rotatively borne by a bearing 83 which is co-axially provided with the shaft 61. The impeller wheel 80 has a channel section in a radial direction to the shaft 61. The impeller vanes 81 are formed on an outer cylindrical surface of an outer drum part of the impeller wheel 80. A rotor 82 is fixed on an outer cylindrical surface of an inner drum part of the impeller wheel 80. A stator 84 having fixed windings 86 is held on a tubular bracket 85 which is held on the frame 73 between the inner drum part and the outer drum part of the impeller wheel 80. The rotor 82, the stator 84 constitute an impeller motor 87 for driving the impeller wheel 80. The impeller wheel 80, the impeller vanes 81 and the motor 87 constitute an external blower 88 which is independently driven from the motion of the main induction motor 700. Type of the impeller motor 87 is not necessarily limited to induction type. Connection holes 73a and 73b are formed on the frame 73.

By such a configuration, the bearings 83 for bearing the impeller wheel 80 are co-axially provided with the shaft 61, so that the external blower 88 can be made small.

When the impeller wheel 80 is rotated in the direction shown by arrow E by the impeller motor 87, air outside of the induction motor 700 is absorbed into the inside space of the induction motor 700 through the connection holes 73a as shown by arrows F by the rotation of the impeller vanes 81. The air absorbed into the inside of the induction motor 700 cools the secondary-conductors 64 which are formed on the rotor 60 while the air passes through a gap "g" between the rotor 60 and the stator 70. After that, the air is exhausted to the outside of the induction motor 700 from the connection holes 73b.

It is preferable to form a ventilation path (not shown in the figure) on each of the secondary-conductors 64 for increasing the cooling capacity, similar to the ventilation path 15 in the first embodiment.

On the other hand, when the impeller wheel 80 is rotated in a direction opposite to the direction shown by arrow E, the air flows into the inside of the induction motor 700 in an opposite direction to the direction shown by arrow F. When the air flows in the direction shown by arrow F, the left side of the secondary-conductor 64 in FIG.14 is more effectively cooled than the right side thereof. On the contrary, when the air flows in the direction opposite to the direction shown by arrow F, the right side of the secondary-conductor 64 is more effectively cooled than the left side thereof. Accordingly, if the rotation direction of the impeller wheel 80 is suitably reversed, the left and right side of the secondary-conductor 64 can be cooled evenly. Furthermore, the rotation speed of the impeller wheel 80 by the impeller motor 87 can be controlled responding to the degree of heating in the induction motor 700. As a result, the temperature of the secondary-conductors 64 of the rotor 60 of the induction motor 700 can be controlled accurately.

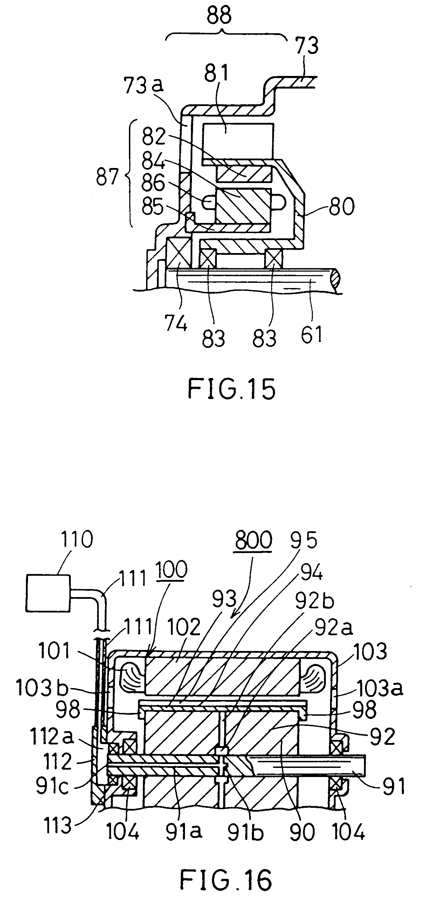

In the above-mentioned fourth embodiment, the rotor 82 of the impeller motor 87 is provided on the outer cylindrical surface of the inner drum part of the impeller wheel 80, and the stator 84 of the impeller motor 87 is provided on inner cylindrical surface of the tubular bracket 85. However, as shown in FIG.15, it is possible that the rotor 82 of the impeller motor 87 is provided on an inner cylindrical surface of the outer drum part of an impeller wheel 80, and the stator 84 is provided on an outer cylindrical surface of a tubular bracket 85.

### FIFTH EMBODIMENT

A fifth preferred embodiment of an induction machine of the invention is described referring to FIG.16. FIG.16 is a sectional side view showing a configuration of an induction motor according to the fifth embodiment.

As shown in FIG.16, the induction motor 800 comprises a rotor 90, a stator 100 and a frame 103. The rotor 90 comprises a shaft 91, a core 92 fixed on the shaft 91, slots 93 formed on an outer face of the core 92, secondary-conductors 94 formed on the slots 93 and short-circuited circular rings 98. Ventilation paths 95 are provided along the secondary-conductors 94, similar to the ventilation paths 15 in the first embodiment. The stator 100 has a stator core 102 and primary windings 101 wound around the stator core 102. The shaft 91 is rotatively borne by bearings 104 which are held on the frame 103. Connection holes 103a and 103b are provided on the frame 103. Furthermore, first and second air supplying paths 91a and 91b are provided on the shaft 91. The first air supplying path 91a is co-axially provided on the rotation axis of the shaft 91. The second air supplying path 91b is provided vertical to the rotation axis of the shaft 91 and penetrates the first air supplying path 91a. A buffer space 92a is circularly formed on the core 92 of the rotor 90 and face the second air supplying path 91b. Connection paths 92b for connecting the buffer space 92a, and the ventilation paths 95 are provided in the rotor core 92 in a direction vertical to the rotation axis of the rotor 90.

A cover 112 is provided on the frame 103 for sealing a left end 91c of the shaft 91. Thus, a space 112a is formed between the cover 112 and the frame 103. An air compressor 110 for compressing air and a piping 111 for connecting the air compressor 110 and a space 112a in the cover 112 of the induction motor 800 are provided. A seal 113 is provided between the shaft 91 and the frame 103 in the vicinity of the left end of the shaft 91. As the seal 113, an oil seal or mechanical seal can be used. Furthermore, a labyrinth seal can be used as the seal 113, if a little leakage of air can be tolerated.

In the induction motor 800 configured above, the compressed air from the air compressor 110 passes to the ventilation paths 95 through the piping 111, the space 112a, the first air supplying path 91a, the second air supplying path 91b, the buffer space 92a and the connecting paths 92b. Thus, the secondary-conductors 94 can be cooled.

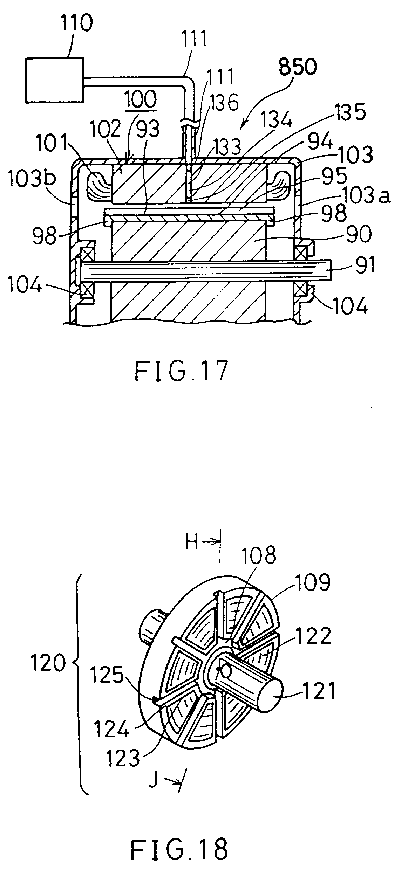

Another example of an induction motor according to the fifth embodiment is described referring to FIG.17 which is a sectional side view of the induction motor 850. Elements designated by the same numerals in FIG.16 are substantially the same as those, so that the explanations of them are omitted.

As shown in FIG.17, the stator core 102 is departed in two parts by spacers 133. An inner circular space 135 is formed by the separated cores 102 and the spacers 133. An outer circular space 136 is formed by the frame 103, the separated cores 102 and the spacers 133. Radial air paths 134 are formed between the spacers 133. The piping 111 is connected to the outer circular space 136 and penetrates through the frame 103.

In the induction motor 850 configured above, the compressed air from the air compressor 110 passes to the ventilation paths 95 through the piping 111, the outer circular space 136, the radial air paths 134 and the inner circular space 135. Thus, the secondary-conductors 94 can be cooled.

In this configuration, the compressed air can be supplied into the inside space of the induction motor 850 without any seal for sealing between the shaft 91 and the frame 103. Thus, the configuration of the induction motor 850 can be simplified. By the cooling mechanism or cooling method according to the fifth embodiment, air compressor 110 can be disposed at a position away from the induction motor. As a result, the induction motor 800 shown in FIG.16 or 850 shown in FIG.17 can be down-sized.

Alternatively, a pressure reducing device can be used instead of the air compressor 110. In this case, the air flows in the reverse direction to the above-mentioned route. Furthermore, the compressed air can enter into the induction motor through the connection holes 103a or 103b. In this case, the air is exhausted from the piping 111.

In summary, the air flows into the ventilation paths 95 by the pressure difference in the air supplying paths 92b in FIG.16 or 134 in FIG.17 from the outside of the induction motor 800 or 850.

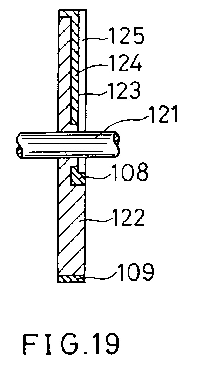

In the above-mentioned first to fifth embodiments, the rotor of the induction motor has a drum shape. Alternatively, another shape such as disc shape shown in FIGS.18 and 19 can be used. FIG.18 is a perspective view showing a configuration of the disc-shaped rotor. FIG.19 is a sectional side view of the rotor.

As shown in FIGS.18 and 19, the disc-shaped rotor 120 comprises a shaft 121, an iron core 122, slots 123, secondary-conductors 124 which are radially disposed, an inner short-circuiting circular ring 108 and an outer short-circuiting circular ring 109. Ventilation paths 125 are radially formed along the secondary-conductors 124.

In the disc-shaped rotor, the ventilation paths 125 are disposed in the radial direction. Thus, the pumping operation is generated in the ventilation paths 125 when the rotor 120 rotates. As a result, the air successfully flows into the ventilation paths 125 from the outer periphery to the inner periphery of the core 122. Furthermore, it is preferable to provide vanes corresponding to the first and second vanes 20 and 21 in the first embodiment at positions adjoining to the ventilation paths 125 on the inner and outer peripheries of the core 122. Therefore the cooling capacity can be increased. Still furthermore, the ventilation paths 125 can be slanted similar to the second embodiment shown in FIG.10.

When the rotation direction of the disc-shaped rotor 120 is as previously defined, it is preferable to form the secondary-conductors 124 and the ventilation paths 125 as a spiral shape. Thereby, a very strong pumping operation can be generated in the ventilation paths 125 and the cooling capacity can be made much larger.

The invention may be embodied in other specific forms without departing from the spirit and scope thereof. The embodiments are to be considered in all respects as illustrative and not restrictive. The scope of the invention is indicated by the appended claims rather than by the foregoing description, and all changes which come within the meaning and range of equivalency of the claims are intended to be embraced therein.

## Claims

1. An induction machine comprising:
a plurality of slots (13) formed on an outer surface of a core (12) of a rotor(10), said rotor having an axis (11) of rotation;
a plurality of secondary-conductors (14) formed in said slots (13);
a plurality of ventilation paths (15) formed in and along said secondary-conductors (14), said ventilation paths each having a pair of openings;
a pair of first and second vanes (20, 21) respectively provided on outer peripheries (18a, 19a) of both ends of said rotor (10) perpendicular to the rotation axis (11) of said rotor and adjacent to both ends of each of said ventilation paths (15) for generating an air flow in each of said ventilation paths in a predetermined direction when said rotor rotates.

2. The induction machine in accordance with claim 1, wherein
said first vanes (20) are formed for absorbing air, present in the vicinity of said first vanes, into said ventilation paths (15) when said rotor (10) rotates in a predetermined direction; and
said second vanes (21) are formed for exhausting air, present in said ventilation paths, out to the outside of said ventilation paths when said rotor rotates in said predetermined direction.

3. The induction machine in accordance with claim 1 or 2, wherein
said rotor (10) has a drum shape having an outer cylindrical surface and said slots (13) are formed on the outer cylindrical surface parallel to the rotation axis (11) of said rotor.

4. The induction machine in accordance with claim 1 or 2, wherein
said rotor (30) has a drum shape having an outer cylindrical surface and said slots (33) are formed on the outer cylindrical surface slanted against the rotation axis (11) of said rotor in a manner so that air flows into each of said ventilation paths (35) from an opening (35a) positioned forward in the rotation direction of said rotor and the air is exhausted from the other opening (35b) of said ventilation paths.

5. The induction machine in accordance with claim 1 or 2, wherein
said rotor (120) has a disc shape and said slots (123) are provided on a plane surface perpendicular to the rotation axis (121) of said rotor in a radial direction to said rotation axis.

6. The induction machine in accordance with claim 1 or 2, wherein
each of said ventilation paths is alternatively selected from a channels (15, 35) or a tube (24).

7. The induction machine in accordance with claim 1, wherein
a mortise (12a) having a groove shape along said slot or a hollow is formed on each side face of said slot (13) where a width (b2) on the bottom of said mortise is wider than a width (b1) of an opening of said mortise; each of said secondary-conductor (14) is formed by casting in each of said slots; and a part (14a) of said secondary-conductor is filled into said mortise and serves as a tenon.

8. The induction machine in accordance with claim 1, wherein
a tenon (12b) having a rail shape along said slot or a protrusion is formed on each side face of said slot (13), where a width (b4) of a top end of said tenon is wider than a width (b3) of a neck of said tenon; each of said secondary-conductors (14) is formed by casting in each of said slots; and a part of said secondary-conductor is engaged with said tenon (12b) and serves as a mortise.

9. The induction machine in accordance with claim 1, wherein
an overhang (12c) having a rail shape along said slot or protrusion is formed on each side face of said slot (13), where a width (b6) of a top end of said overhang is wider than a width (b5) of a neck of said overhang; each of said secondary-conductors (14) is formed by casting in each of said slots; and a part of said secondary-conductor is engaged with said overhang (12c) and serves as a mortise.

10. The induction machine in accordance with claim 7, 8 or 9, wherein
a narrowest part (W) of said slots is positioned in the vicinity of an open end of said slots.

11. The induction machine in accordance with claim 1 or 2, wherein
square pipes (24) serve as said secondary-conductors and said ventilation paths are inserted into each of said slots.

12. The induction machine in accordance with claim 1, wherein
surfaces of said ventilation paths are made uneven by forming protrusions or roughing in order to make turbulent air flow in said ventilation paths.

13. An induction machine comprising:
a plurality of herringbone-shaped slanted slots (43) having turning points (45a) caused by the herringbone shape, said slanted slots being formed on an outer cylindrical surface of a core (12) of a rotor (38), said rotor (38) having an axis (11) of rotation;
a plurality of secondary-conductors (14) formed in said slanted slots (43);
a plurality of herringbone-shaped slanted ventilation paths (45) each having a pair of openings (45b), said slanted ventilation path (45) being formed in and along said secondary-conductors (14) in a manner so that both openings (45b)of each herringbone-shaped slanted ventilation path (45) are positioned forward with respect to the rotation axis (11) of said rotor when said rotor (38) rotates in a predetermined direction;
a plurality of air paths (54) formed at positions on a stator facing the turning points (45a) of said herringbone-shaped slanted ventilation paths (45) and connecting a gap between said rotor (38) and said stator (50) and the outside of the induction motor;
a pair of vanes (40) respectively provided on outer peripheries of both ends of said rotor (38) perpendicular to the rotation axis (11) of said rotor and adjacent to said both ends of each of said herringbone-shaped slanted ventilation paths (45) for absorbing air in the vicinity of said vanes (40) into said herringbone-shaped slanted ventilation paths (45) and passing the air through said slanted ventilation paths to the outside when said rotor rotates in said predetermined direction, and for absorbing air from outside of said induction motor into said herringbone-shaped slanted ventilation paths (45) through said air paths (54) when said rotor rotates (38) in a direction opposite to said predetermined direction.

14. The induction motor in accordance with claim 13, wherein
a buffer space (55), which is connected to said ventilation paths, is formed in said stator for preventing a pulsating air flow.

15. The induction machine in accordance with claim 13, wherein
a mortise having a groove shape along said slot or a hollow is formed on each side face of said slot where a width on the bottom of said mortise is wider than a width of opening of said mortise; each of said secondary-conductors is formed by casting in each of said slots; and a part of said secondary-conductor is filled into said mortise and serves as a tenon.

16. The induction machine in accordance with claim 13, wherein
a tenon having a rail shape along said slot or a protrusion is formed on each side face of said slot, where a width of a top end of said tenon is wider than a width of a neck of said tenon; each of said secondary-conductors is formed by casting in each of said slots; and a part of said secondary-conductor is engaged with said tenon and serves as a mortise.

17. The induction machine in accordance with claim 13, wherein
an overhang having a rail shape along said slot or a protrusion is formed on each side face of said slot, where a width of a top end of said overhang is wider than a width of a neck of said overhang; each of said secondary-conductors is formed by casting in each of said slots; and a part of said secondary-conductor is engaged with said overhang and serves as a mortise.

18. The induction machine in accordance with claim 15, 16 or 17, wherein
a narrowest part of said slot is positioned in the vicinity of an open end of said slot.

19. The induction machine in accordance with claim 13 or 14, wherein
surfaces of said slanted ventilation paths are made uneven by forming protrusions or roughing in order to make turbulent air flow in said slanted ventilation paths.

20. An induction machine comprising:
an impeller (80) rotatively borne by a bearing (83) which is disposed co-axially with a rotation axis (61) of a rotor (700) of said induction machine, said impeller having a rotation direction; and
means (87) for driving said impeller independently from the rotation of said rotor for generating air flow for cooling said rotor.

21. The induction machine in accordance with claim 20, wherein
the rotation direction of said impeller is alternatively changed in opposite directions at a predetermined interval for changing the direction of air flow in a gap between said rotor and a stator of said induction motor.

22. The induction motor in accordance with claim 20 or 21, further comprising:
a plurality of slots (63) formed on an outer surface of a core (62) of said rotor (60);
a plurality of secondary-conductors (64) formed in said slots (63); and
a plurality of ventilation paths formed in and along said secondary-conductors.

23. An induction machine comprising:
a plurality of slots (93) formed on an outer surface of a core (92) of a rotor (90), said rotor having an axis of rotation;
a plurality of secondary-conductors (94) formed in said slots (93);
a plurality of ventilation paths (95) formed in and along said secondary-conductors (94);
at least one air path ( 91a, 91, 92a, 134) for supplying or exhausting air to or from substantially the center of said ventilation paths; and
pressure difference generating means (110) disposed outside of said induction machine for generating a pressure difference between said ventilation paths and said air path, thereby generating air flow in said ventilation paths for cooling said rotor.

24. The induction machine in accordance with claim 23, wherein
said air path (134) penetrates a stator (100) of said induction machine.

25. The induction motor in accordance with claim 23, wherein
said air path comprises an axial part (91a) provided in a shaft (91) of said rotor co-axially with the rotation axis thereof and at least one radial part (91b) provided in said shaft (91) perpendicular to the rotation axis.

26. A method for manufacturing a rotor of an induction machine comprising the steps of:
putting a core (12) of a rotor having a plurality of slots (13) formed on outer surface of said core into a casting mold (16);
inserting an insert die (17) into each slot (13) through said casting mold (16);
filling molten metal into a space formed by said slots (13), said insert die (17) and said casting mold (16); pulling said insert die (17) out of said slots (13) after solidification of the metal; and
taking off said core from said casting die.
